# EUROPÄISCHE PATENTSCHRIFT

(11) **EP 0 849 326 B1**
(45) Veröffentlichungstag und Bekanntmachung des Hinweises auf die Patenterteilung: **07.04.2004**
(21) Anmeldenummer: 97122117.1
(22) Anmeldetag: 15.12.1997
(51) Int. Cl.: C08L 69/00

(54) **Polymerzusammensetzung**
Polymer composition
Composition polymérique

(30) Priorität: 20.12.1996 DE 19653357
(43) Veröffentlichungstag der Anmeldung: 24.06.1998
(73) Patentinhaber: Ticona GmbH, 65451 Kelsterbach (DE)
(72) Erfinder: Römer, Michael, Dr., 65428 Rüsselsheim (DE); Dimitriadis, Anastasios, 65428 Rüsselsheim (DE); Raudies, Dirk, 56479 Elsoff (DE)

(56) Entgegenhaltungen:
- EP-A- 0 217 563
- EP-A- 0 265 791
- EP-A- 0 535 650

## Beschreibung

Die vorliegende Erfindung betrifft eine neue Spritzgußzusammensetzung, ein Verfahren zu deren Herstellung und ihre Verwendung.

Aus EP-A-44175 ist eine Polymerzusammensetzung bekannt, die aus 5 bis 75 Gew.-% Polycarbonat und 25 bis 95 Gew.-% einer vollaromatischen thermoplastisch verarbeitbaren anisotropen Schmelze eines Copolyesters besteht und unterhalb von 350 °C verarbeitet wird.

Aus EP-A-217 563 ist ein in sich selbstverstärkter polymerer Verbundwerkstoff bekannt, der aus einem thermoplastischen Grundpolymer mit flexibler Kette und etwa 2 bis etwa 20 Gew.-%, bezogen auf das zusammengesetzte Gewicht des Grundpolymers und des flüssigen kristallinen Polymers eines schmelzverarbeitbaren, mit dem Grundpolymer inkompatiblen flüssigen kristallinen Polymers, besteht. Das flüssige kristalline Polymer liegt in der Form von im wesentlichen in einer Richtung orientierten Fasem vor, die in einer Matrix des Grundpolymers in situ geformt sind. Die Polymerzusammensetzung zeigt nur geringe selbstverstärkende Wirkungen. Der beschriebene Verstärkungseffekt beruht auf einer scherinduzierten Ausbildung von flüssig kristallinen Polymerfasern, die die Matrix verstärken.

Aus EP-A-30417 ist eine schmelzverarbeitbare Polymerzusammensetzung bekannt, die 0,50 bis 20 Gew.-% mindestens eines Polymeren enthält, das die Bildung einer anisotropischen Schmelze ermöglicht, und mindestens ein anderes schmelzbares Polymer. Bei der Polymerzusammensetzung überlappen sich die Temperaturbereiche, bei denen einerseits das Polymer eine anisotropische Schmelze formen kann und andererseits das schmelzbare Polymer geschmolzen werden kann. Hierbei wird die schmelzviskositätsreduzierte Wirkung von flüssige kristallinen Polymeren in der als Fließverbesserer genutzt.

Aufgabe der vorliegenden Erfindung liegt darin, eine Polymerzusammensetzung bereitzustellen, die hohe mechanische Eigenschaften, insbesondere in dünnen Wandstärken, aufweist. Eine weitere Aufgabe der vorliegenden Erfindung liegt darin, ein wirtschaftliches und umweltschonendes Verfahren zur Herstellung dieser Polymerzusammensetzung bereitzustellen.

Die vorliegende Erfindung wird durch eine Polymerzusammensetzung gelöst, die 5.0 Gew.-% bis 65.0 Gew.-% mindestens eines thermotropen flüssigkristallinen Copolymers, 35 Gew.-% bis 95.0 Gew.-% mindestens eines thermoplastisch verarbeitbaren Polycarbonats und 0.01 Gew.-% bis 5.0 Gew.-% mindestens eines Verstärkers enthält. Diese erfindungsgemäße Polymerzusammensetzung weist überraschend hohe mechanische Eigenschaften, insbesondere in dünnen Wandstärken, auf.

Die selbstverstärkende Wirkung des flüssig kristallinen Polymers geht aus der Produktbroschüre Vectra, Hoechst AG, 1992 hervor. Wenn das flüssig kristalline Polymer in Form von Fibrillen oder in Tropfenform als Verstärkungsstoff in der Polymerzusammensetzung, wie etwa in einer Polycarbonat-Matrix eingesetzt wird, ist dessen selbstverstärkende Wirkung nur gering. Es wurde überraschend gefunden, daß bei solchen Polymerzusammensetzungen hohe mechanische Eigenschaften, insbesondere in dünnen Wandstärken durch Zugabe der erfindungsgemäßen Verstärker erhalten werden.

Eine bevorzugte Ausgestaltung der Erfindung ist eine Polymerzusammensetzung, die 7.5 Gew.-% bis 40.0 Gew.-% mindestens eines thermotropen flüssigkristallinen Copolymers, 60.0 Gew.-% bis 92.5 Gew.-% mindestens eines thermoplastisch verarbeitbaren Polycarbonats und 0.05 Gew.-% bis 3.0 Gew.-% mindestens eines Verstärkers enthält. Diese erfindungsgemäße Polymerzusammensetzung weist überraschend sehr hohe mechanische Eigenschaften, insbesondere in dünnen Wandstärken, auf.

Eine besonders bevorzugte Ausgestaltung der Erfindung ist eine Polymerzusammensetzung, die 10.0 Gew.-% bis 25.0 Gew.-% mindestens eines thermotropen flüssigkristallinen Copolymers, 75 Gew.-% bis 90.0 Gew.-% mindestens eines thermoplastisch verarbeitbaren Polycarbonats und 0.1 Gew.-% bis 1.5 Gew.-% mindestens eines Verstärkers enthält. Diese erfindungsgemäße Polymerzusammensetzung weist überraschend außerordentlich hohe mechanische Eigenschaften, insbesondere in dünnen Wandstärken, auf.

Bei der erfindungsgemäßen Polymerzusammensetzung weist das thermotrope flüssigkristalline Copolymer wiederkehrende Einheiten der Formel (I) bis (VI) auf:

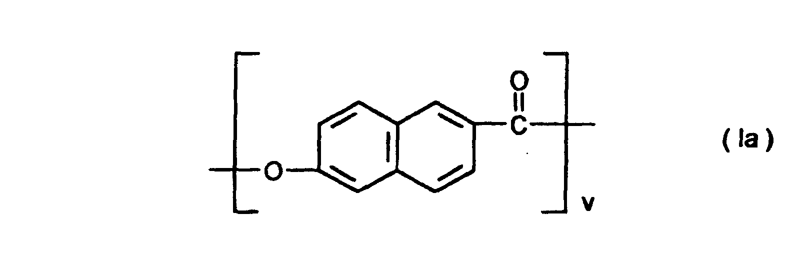

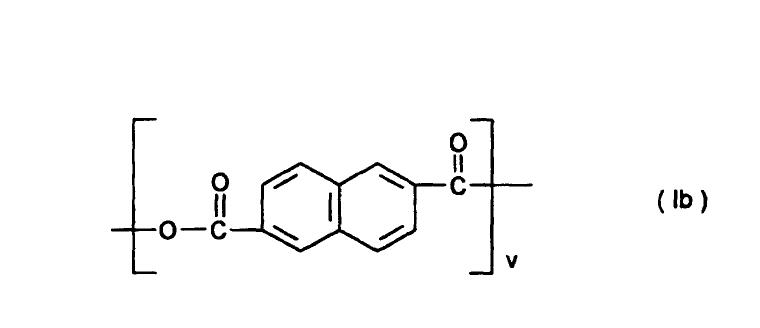

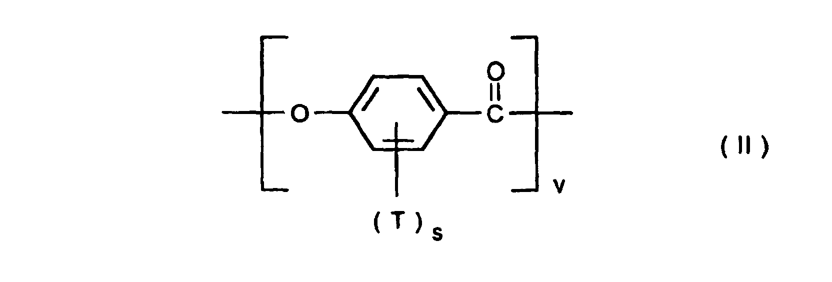

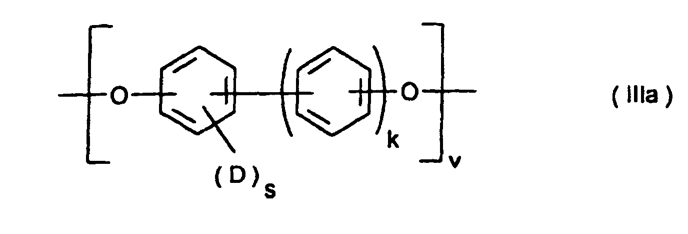

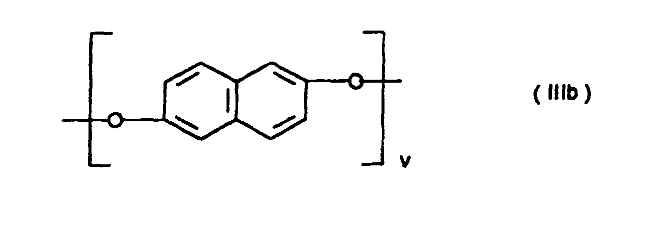

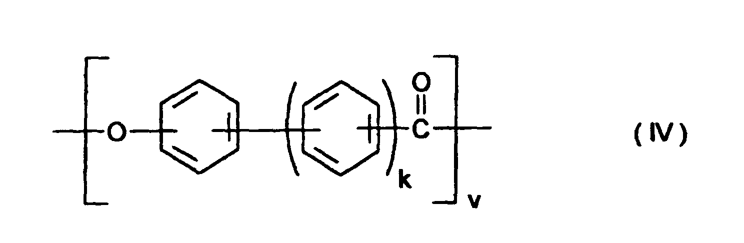

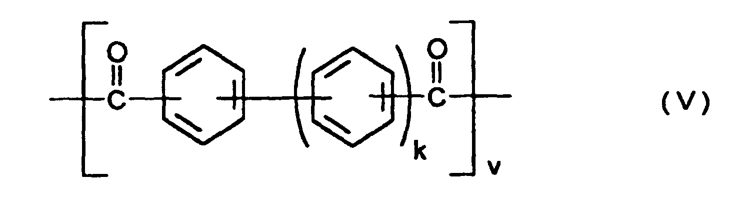

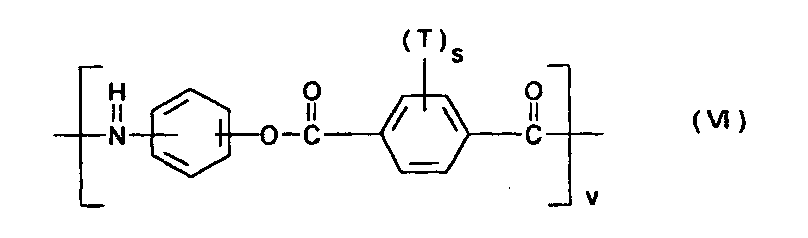

In den Formeln (I) bis (VI) sind
- T: gleich oder verschieden und eine C₁-C₄-Alkylgruppe, C₁-C₄-Alkoxygruppe oder ein Halogenatom,
- D: gleich oder verschieden und eine C₁-C₄-Alkylgruppe, C₆-C₁₀-Arylgruppe, C₆-C₁₀-Aralkylgruppe oder ein Halogenatom,
- s: eine ganze Zahl von 1 bis 4,
- k: eine ganze Zahl 0 oder 1 und
- v: eine ganze Zahl ≥ 1.

Flüssigkristalline Copolymere, die Naphthalinverbindungen enthalten, sind als vollaromatische Verbundmasse unter den Marken ®Vectra A 130, ®Vectra C 130, ®Vectra E 130, ®Vectra RD 501, ®Vectra RD 2001, Zenite® 6130, Zenite® 7130 und Thermix® bekannt. Flüssigkristalline Copolymere, die Naphthalinverbindungen und Aminophenol enthalten, sind unter den Marken ®Vectra B, ®Vectra L und ®Vectra Ei bekannt. Flüssigkristalline Copolymere, die Biphenyleinheiten enthalten, sind unter den Marken Amoco® G 930, Sumikasuper® E 6008 und ®Vectra E 130 bekannt.

Bei der erfindugsgemäßen Polymerzusammensetzung ist das thermoplastisch verarbeitbare Polycarbonat eine Verbindung mit der allgemeinen Strukturformel 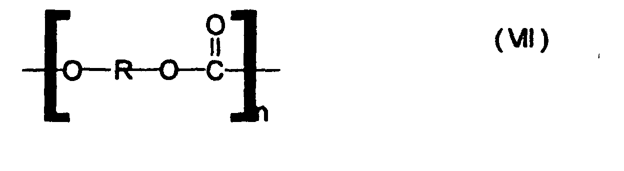 wobei
- R: eine organische Gruppe, wie C₁-C₄-Alkylgruppe, C₁-C₄-Alkoxygruppe, C₆-C₁₀-Arylgruppe oder C₆-C₁₀-Aralkylgruppe und
- n: eine ganze Zahle ≥ 1 sind.

Die auf Bisphenol basierenden Polycarbonate sind besonders geeignet. Ganz besonders geeignet sind Polycarbonate, die das Monomer gemäß Formel (VII') enthalten.

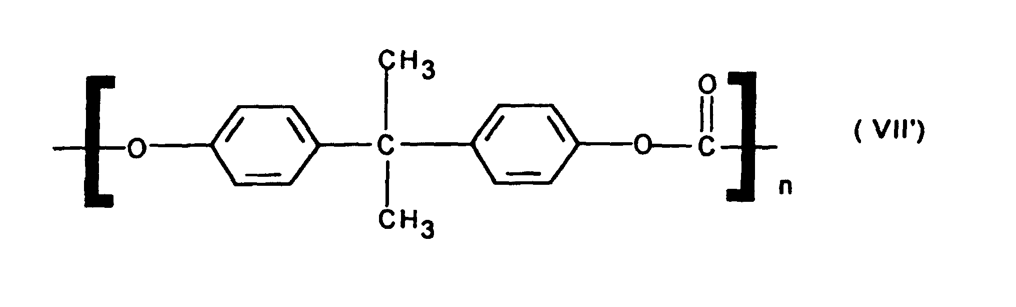

Besonders bevorzugt sind Polycarbonate wie Poly[oxycarbonyloxy-1,4-phenylen-(1-methyl-ethyliden)-1,4-phenylen] (Makrolon®) und andere Polycarbonate, die unter den Marken Lexan®, Apec® oder Calibre® bekannt sind. Weiter sind Blends aus Polycarbonat und Acrylnitrilbutadienstyrol (ABS) sehr gut als Polycarbonatkomponente geeignet. Diese Polycarbonat/ABS-Blends sind unter Bayblend® oder Cycoloy® bekannt.

Die erfindungsgemäßen Verstärker weisen bevorzugt bifunktionelle oder trifunktionelle Struktureinheiten auf. Es handelt sich dabei bevorzugt um phosphorhaltige Verbindungen wie Pentaerythritolphosphitester wie Bis(2,4-di-tertbutylphenyl)pentaerythritoldiphophitester (Ultranox® 626). 1,2,4,5-Benzoltetracarbonsäure (Pyromellithsäure) oder Pyromellithsäureanhydrid, silikonelastomermodifizierte Polyetherimide Siltem®, vemetzte Silikonelastomere wie Siloxan oder auf Basis von Siloxan mit 5 Gew.-% Carboxylendgruppen wie SLM 445048 oder Siloxan mit 25 Gew.-% Phenylendgruppen und Carboxylendgruppen wie SLM 445045 oder Gemische der Verbindungen sind weitere erfindungsgemäße Verstärker. Der verwendete Verstärker erhöht den Selbstverstärkungseffekt des flüssigkristallinen Copolymers.

Bevorzugt sind als Verstärker Gemische aus Phosphitestem mit Siltem und Pyromellithsäure mit Silikonelastomeren.

Erfindungsgemäß ist vorgesehen daß die Polymerzusammensetzung zum Granulat verarbeitet wird. Dazu wird ein Gemisch aus mindestens einem flüssigkristallinen Copolymer, mindestens einem Polycarbonat und mindestens einem Verstärker in dem vorstehend beschriebenen Gew.-%-Verhältnis aufgeschmolzen und zu einem Strang extrudiert. Der Strang wird zerkleinert, wobei ein Granulat von etwa 3 bis 4 mm erzeugt wird. Das erfindugsgemäß hergestellte Granulat kann besonders bevorzugt zu erfindungsgemäßen Formteilen verarbeitet werden.

Erfindungsgemäß ist die Verwendung eines Verstärkers für die Verstärkung der mechanischen Eigenschaften der Polymerzusammensetzung bei abnehmenden Wandstärken der spritzgegossenen Formteile vorgesehen. Dabei beträgt die Zunahme des Zug-E-Moduls mindestens bei 25 % und der Reißfestigkeit mindestens bei 15 % bei einer Reduktion der Wandstärke von 4.0 auf 1.6 mm.

Erfindungsgemäß ist die Verwendung einer Polymerzusammensetzung zur Herstellung von dünnwandigen Gehäuseteilen vorgesehen. Für die Herstellung der dünnwandigen Gehäuseteilen wird das erfindungsgemäß hergestellte Granulat verwendet.

Die vorliegende Erfindung wird anhand der nachfolgenden Beispiele näher erläutert.

Das Gemisch wurde auf einem Zweischnecken Extruder der Firma Wemer und Pfleiderer ZSK 25 aufgeschmolzen. Es wurde ein Strang wurde extrudiert. Der Strang wurde zerkleinert, wobei ein Granulat mit einer Länge von etwa 3 bis 4 mm erzeugt wurde. Das Granulat wurde bei einer Temperatur von 290 °C auf einer Spritzgußmaschine der Firma Klöckner Ferromatic KT 90 aufgeschmolzen. Die Schmelze wurde mit einem Druck von 1900 bar und einer mittleren Einspritzgeschwindigkeit von 350 mm/s in ein Zugstabwerkzeug eingespritzt. Es wurden Stäbe (Iso-Zugstab) mit Wandstärken von 4,0, 3,2 und 1,6 mm spritzgegossen.

Vergleichsweise wurde das Gemisch direkt bei einer Temperatur von 290 °C auf einer Spritzgußmaschine der Firma Klöckner Ferromatic KT 90 aufgeschmolzen. Die Schmelze wurde mit einem Druck von 1900 bar und einer mittleren Einspritzgeschwindigkeit von 350 mm/s in ein Zugstabwerkzeug eingespritzt. Es wurden Stäbe (Iso-Zugstab) mit Wandstärken von 4,0, 3,2 und 1,6 mm spritzgegossen.

Die hergestellten Stäbe wurden auf einer Zug-Dehnungsmaschine, Typ 43.02 H 3570 der Fa. Instron gegeben. Auf der Zug-Dehnungsmaschine wurde das Zug-E-Modul, die Reißfestigkeit und die Reißdehnung des jeweiligen Stabes gemessen.

### Beispiele

### Beispiel 1

Es wurde ein Gemisch aus 4,0 kg Polycarbonat Makrolon® 2400, 1,0 kg flüssigkristallinem Copolymer ®Vectra A 950 und 0,05 kg Ultranox® 626 hergestellt. Das Gemisch wurde auf einem Zweischnecken Extruder aufgeschmolzen und zu einem Strang extrudiert. Der Strang wurde zerkleinert, wobei ein Granulat mit einer Länge von etwa 3 bis 4 mm erzeugt wurde. Das Granulat wurde 4 h bei 120 °C getrocknet und auf einer Spritzgußmaschine zu Stäben (Iso-Stab) gespritzt. Die Werte der Zugversuche auf der Zugmaschine gehen aus der nachfolgenden Tabelle 1 hervor.

**Tabelle 1**

| **Wandstärke [mm]** | **Zug-E-Modul [PMa]** | **Reißfestigkeit [PMa]** | **Reißdehnung [%]** |
|---|---|---|---|
| **4,0** | 3502 | 79.8 | 4.1 |
| **3,2** | 3882 | 88.7 | 4.2 |
| **1,6** | 4473 | 103.1 | 4,7 |

### Beispiel 2

Beispiel 2 wurde analog zu Beispiel 1 durchgeführt, wobei als Verstärker 0,05 kg Siliconelastomer SLM 445048 (Wacker) verwendet wurden. Die Werte der Zugversuche auf der Zugmaschine gehen aus der nachfolgenden Tabelle 2 hervor.

**Tabelle 2**

| **Wandstärke [mm]** | **Zug-E-Modul [PMa]** | **Reißfestigkeit [PMa]** | **Reißdehnung [%]** |
|---|---|---|---|
| **4.0** | 3170 | 74.4 | 4.1 |
| **3.2** | 3461 | 84.1 | 4.4 |
| **1.6** | 4717 | 111.3 | 4.1 |

### Beispiel 3

Beispiel 3 wurde analog zu Beispiel 1 durchgeführt, wobei als Verstärker 0,05 kg Ultranox® 626 (0,1 %) und 0,25 kg Siltem® ST 1500 (0,5%) verwendet wurden. Die Werte der Zugversuche auf der Zugmaschine gehen aus der nachfolgenden Tabelle 3 hervor.

**Tabelle 3**

| **Wandstärke [mm]** | **Zug-E-Modul [PMa]** | **Reißfestigkeit [PMa]** | **Reißdehnung [%]** |
|---|---|---|---|
| **4.0** | 2908 | 70,1 | 4,0 |
| **3.2** | 3214 | 77,0 | 4,3 |
| **1.6** | 3357 | 85,3 | 4,3 |

### Beispiel 4

Beispiel 4 wurde analog zu Beispiel 1 durchgeführt, wobei das Polymergemisch 3,5 kg Makrolon 2400 (67,5%) und 1,5 kg Vectra A 950 (30%) enthält und als Verstärker 0,1 kg Pyromellithsäure (2 %) und 0,025 kg Siliconelastomer SLM 445025 (0,5 %) verwendet wurden. Die Werte der Zugversuche auf der Zugmaschine gehen aus der nachfolgenden Tabelle 4 hervor.

**Tabelle 4**

| **Wandstärke [mm]** | **Zug-E-Modul [PMa]** | **Reißfestigkeit [PMa]** | **Reißdehnung [%]** |
|---|---|---|---|
| **4.0** | 3918 | 64,7 | 1,9 |
| **3.2** | 4300 | 76,6 | 2,2 |
| **1.6** | 4760 | 101,6 | 2,4 |

### Beispiel 5

Beispiel 5 wurde analog zu Beispiel 1 durchgeführt, wobei als Verstärker 0,05 kg Pyromellithsäure (0,1 %) und 0,05 kg Ultranox® 626 (0,1 %) verwendet wurden. Die Werte der Zugversuche auf der Zugmaschine gehen aus der nachfolgenden Tabelle 5 hervor.

**Tabelle 5**

| **Wandstärke [mm]** | **Zug-E-Modul [PMa]** | **Reißfestigkeit [PMa]** | **Reißdehnung [%]** |
|---|---|---|---|
| **4.0** | 3262 | 69,1 | 3,2 |
| **3.2** | 3604 | 78,4 | 3,3 |
| **1.6** | 4134 | 86,1 | 2,9 |

### Vergleichsbeispiel 1

Vergleichsbeispiel 1 wurde analog zu Beispiel 1 durchgeführt mit dem Unterschied, daß kein Verstärker verwendet wurde. Es wurde ein Gemisch aus 4 kg Polycarbonat und 1 kg LCP ®Vectra A 950 hergestellt. Das Gemisch wurde zu einem Strang extrudiert. Der Strang wurde zerkleinert, wobei ein Granulat mit einer Länge von etwa 3 bis 4 mm erzeugt wurde. Das Granulat wurde 4 h bei 120 °C getrocknet und auf einer Spritzgußmaschine verarbeitet. Es wurden Stäbe (Iso-Stab) gespritzt. Die Werte der Zugversuche auf der Zugmaschine gehen aus der nachfolgenden Tabelle 6 hervor.

**Tabelle 6**

| **Wandstärke [mm]** | **Zug-E-Modul [MPa]** | **Reißfestigkeit [MPa]** | **Reißdehnung [%]** |
|---|---|---|---|
| **4,0** | 2480 | 43.6 | 3.2 |
| **3,2** | 2481 | 44,5 | 2,3 |
| **1,6** | 2576 | 50,7 | 7,2 |

### Vergleichsbeispiel 2

Vergleichsbeispiel 2 wurde mit 4 kg Polycarbonat als Granulat und 1 kg LCP ®Vectra A 950 in Anlehnung an Beispiel 1 und Vergleichsbeispiel 1 mit dem Unterschied durchgeführt, daß das Gemisch direkt bei einer Temperatur von 290 °C auf einer Spritzgußmaschine aufgeschmolzen wurde. Die Schmelze wurde in ein Zugstabwerkzeug eingespritzt. Die Werte der Zugversuche auf der Zugmaschine gehen aus der nachfolgenden Tabelle 7 hervor.

**Tabelle 7**

| **Wandstärke [mm]** | **Zug-E-Modul [MPa]** | **Reißfestigkeit [MPa]** | **Reißdehnung [%]** |
|---|---|---|---|
| **4.0** | 2720 | 63.5 | 5.8 |
| **3.2** | 2653 | 67,7 | 59,1 |
| **1.6** | 2595 | 60,7 | 11,6 |

In Tabelle 8 werden die mechanischen Eigenschaften der Stäbe aus Beispiel 1 und den Vergleichsbeispielen 1 und 2 verglichen.

**Tabelle 8**

| **Beispiel/ Vergleichsbeispiel** | **Wandstärke [mm]** | **Zug-E-Modul [PMa]** | **Reißfestigkeit [PMa]** | **Reißdehnung [%]** |
|---|---|---|---|---|
| **B1** | **4,0** | 3502 | 79.8 | 4.1 |
| **V1** | **4,0** | 2480 | 43.6 | 3.2 |
| **V2** | **4,0** | 2720 | 63.5 | 5.8 |
| **B1** | **3,2** | 3882 | 88,7 | 4,2 |
| **V1** | **3,2** | 2481 | 44,5 | 2,3 |
| **V2** | **3,2** | 2653 | 67,7 | 59,1 |
| **B1** | **1,6** | 4473 | 103,1 | 4,7 |
| **V1** | **1,6** | 2576 | 50,7 | 7,2 |
| **V2** | **1,6** | 2595 | 60,7 | 11,6 |

## Patentansprüche

1. Polymerzusammensetzung, enthaltend
5,0 Gew.-% bis 65,0 Gew.-% mindestens eines thermotropen flüssigkristallinen Copolymers,
35,0 Gew.-% bis 95,0 Gew.-% mindestens eines thermoplastisch verarbeitbaren Polycarbonats und
0.01 Gew.-% bis 5,0 Gew.-% mindestens eines Verstärkers, wobei der Verstärker mindestens eine Verbindung wie aromatische Säure, Siloxan oder silikonmodifizierte Verbindung ist oder aus einem Gemisch von Phosphitestern mit Polyetherimiden oder aus einem Gemisch von Pyromellithsäure mit Silikonelastomeren besteht.

2. Polymerzusammensetzung nach Anspruch 1, wobei der Verstärker aus einem Gemisch von Phosphitestem mit Polyetherimiden oder aus einem Gemisch von Pyromellithsäure mit Silikonelastomeren besteht.

3. Polymerzusammensetzung nach Anspruch 1 oder 2, enthaltend
7,5 Gew.-% bis 40,0 Gew.-% mindestens eines thermotropen flüssigkristallinen Copolymers,
60,0 Gew.-% bis 92,5 Gew.-% mindestens eines thermoplastisch verarbeitbaren Polycarbonats und
0,05 Gew.-% bis 3,0 Gew.-% mindestens eines Verstärkers.

4. Polymerzusammensetzung nach einem oder mehreren der Ansprüche 1 bis 3, enthaltend
10,0 Gew.-% bis 25,0 Gew.-% mindestens eines thermotropen flüssigkristallinen Copolymers,
75,0 Gew.-% bis 90,0 Gew.-% mindestens eines thermoplastisch verarbeitbaren Polycarbonats und
0,1 Gew.-% bis 1,5 Gew.-% mindestens eines Verstärkers.

5. Polymerzusammensetzung nach einem oder mehreren der Ansprüche 1 bis 4, wobei ein thermotropes flüssigkristallines Copolymer wiederkehrende Einheiten der Formel (I) bis (VI) aufweist 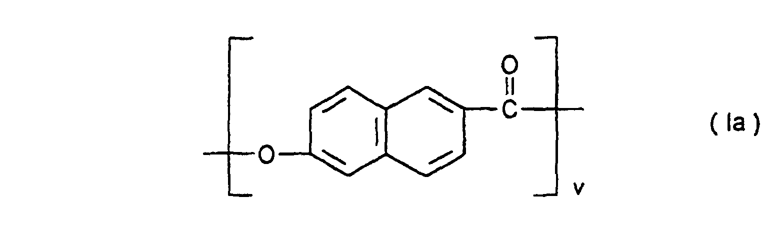 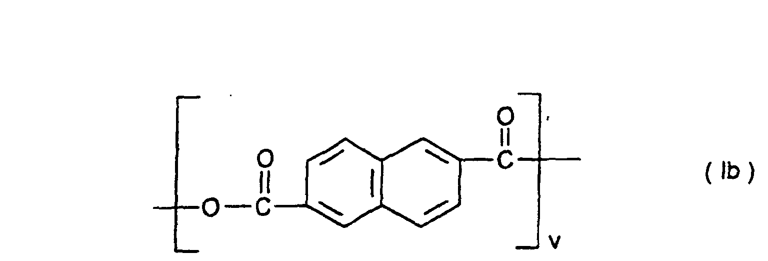 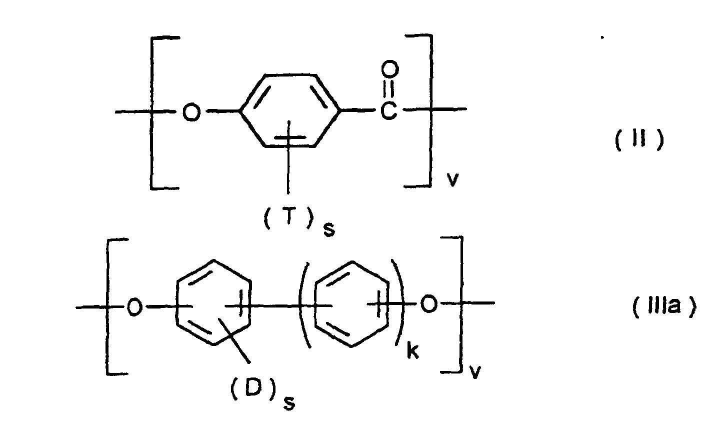 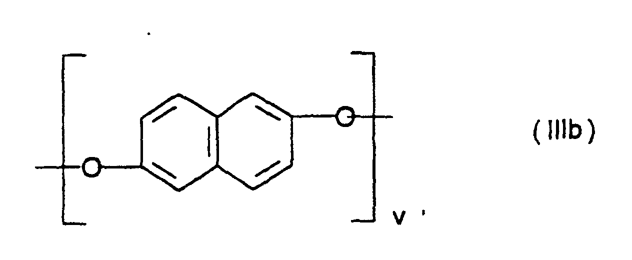 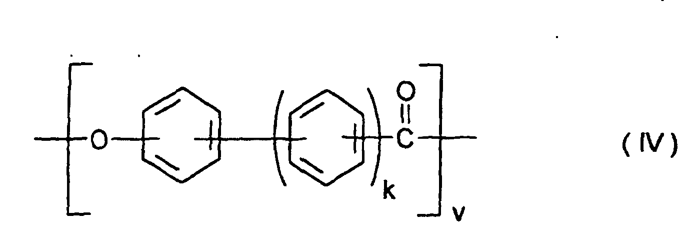 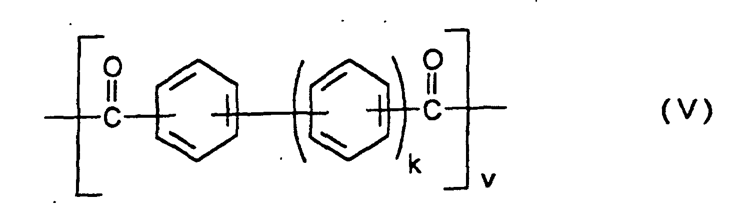 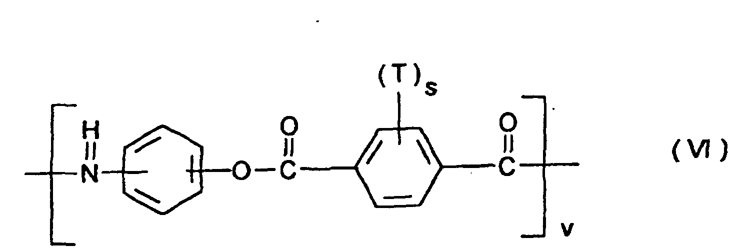 worin
T gleich oder verschieden und eine C₁ - C₄-Alkylgruppe, C₁ - C₄-Alkoxygruppe oder ein Halogenatom bedeutet,
D gleich oder verschieden und eine C₁ - C₄-Alkylgruppe, C₆ - C₁₀-Arylgruppe, C₆ - C₁₀-Aralkylgruppe oder ein Halogenatom bedeutet,
s eine ganze Zahl von 1 bis 4 bedeutet,
k eine ganze Zahl 0 oder 1 bedeutet und
v eine ganze Zahl ≥ 1 bedeutet.

6. Polymerzusammensetzung nach einem oder mehreren der Ansprüche 1 bis 5, wobei das thermoplastisch verarbeitbare Polycarbonat mindestens eine Verbindung der allgemeinen Formel (VII) 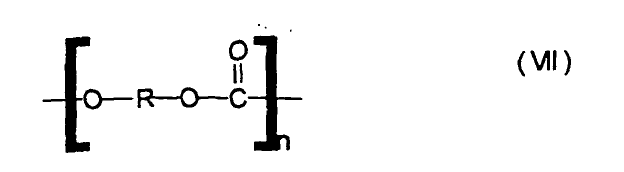 ist, wobei
R eine organische Gruppe, wie C₁ - C₄-Alkylgruppe, C₆ - C₁₀-Arylgruppe oder C₆ - C₁₀-Aralkylgruppe und
n eine ganze Zahl ≥ 1 sind,
vorzugsweise eine auf Bisphenol basierendes Polycarbonat, das das Monomer gemäß Formel (VII') 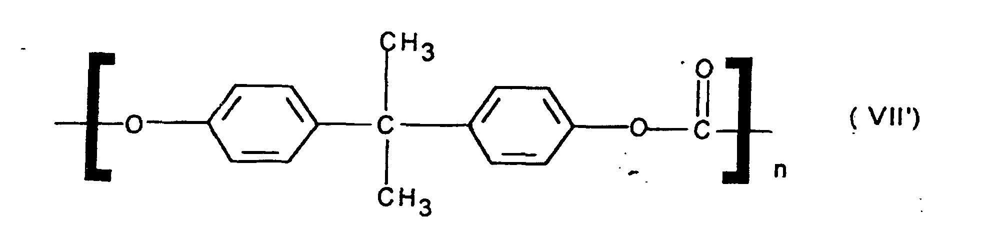 enthält.

7. Verfahren zur Herstellung einer Polymerzusammensetzung nach einem oder mehreren der Ansprüche 1 bis 6, wobei mindestens ein flüssigkristallines Copolymer, mindestens ein Polycarbonat und mindestens ein Verstärker aufgeschmolzen und zu einem Strang extrudiert werden und der Strang zerkleinert wird.

8. Verwendung eines Verstärkers, wobei der Verstärker mindestens eine Verbindung wie aromatische Säure, Siloxan oder silikonmodifizierte Verbindung ist oder aus einem Gemisch von Phosphitestern mit Polyetherimiden oder aus einem Gemisch von Pyromellithsäure mit Silikonelastomeren besteht, zur Verbesserung der mechanischen Eigenschaften von Polymerzusammensetzungen aus flüssigkristallinen Copolymeren und thermoplastisch verarbeitbaren Polycarbonaten.

9. Verwendung einer Polymerzusammensetzung nach einem oder mehreren der Ansprüche 1 bis 6 zur Herstellung von dünnwandigen Gehäuseteilen, langen filigranen Steckverbindungen für Chipmodule, medizinischen Apparaten und Behältern, die dampfdestilliert werden, sowie Glasfasern und Glaskugeln, die mit Mineralien oder Graphit gefüllt sind oder mit Kohlefasern verstärkt sind.

## Claims

1. A polymer composition containing
from 5.0% by weight to 65.0% by weight of at least one thermotropic liquid crystalline copolymer,
from 35.0% by weight to 95.0% by weight of at least one thermoplastically processable polycarbonate and
from 0.01 % by weight to 5.0% by weight of at least one reinforcing agent, wherein the reinforcing agent is at least one compound, such as an aromatic acid, a siloxane or a silicone-modified compound or consists of a mixture of phosphite esters with polyether imides or of a mixture of pyromellitic acid with silicone elastomers.

2. The polymer composition as claimed in claim 1, wherein the reinforcing agent consists of a mixture of phosphite esters with polyether imides or of a mixture of pyromellitic acid with silicone elastomers.

3. The polymer composition as claimed in claim 1 or 2, containing
from 7.5% by weight to 40.0% by weight of at least one thermotropic liquid crystalline copolymer,
from 60.0% by weight to 92.5% by weight of at least one thermoplastically processable polycarbonate and
from 0.05% by weight to 3.0% by weight of at least one reinforcing agent.

4. The polymer composition as claimed in one or more of claims 1 to 3, containing
from 10.0% by weight to 25.0% by weight of at least one thermotropic liquid crystalline copolymer,
from 75.0% by weight to 90.0% by weight : of at least one thermoplastically processable polycarbonate and
from 0.1 % by weight to 1.5% by weight of at least one reinforcing agent.

5. The polymer composition as claimed in one or more of claims 1 to 4, wherein a thermotropic liquid crystalline copolymer has recurring units of the formulae (I) to (VI) 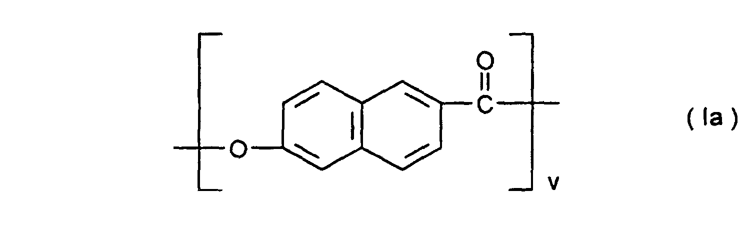 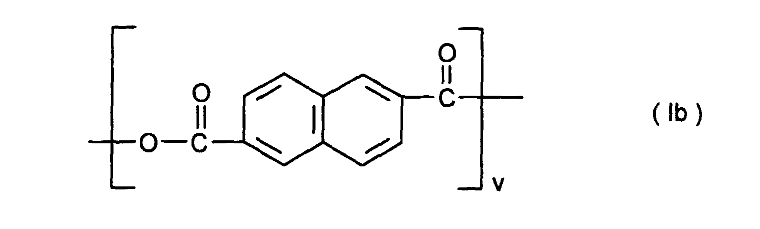 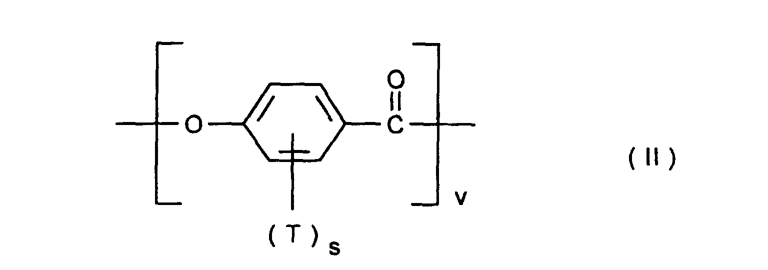 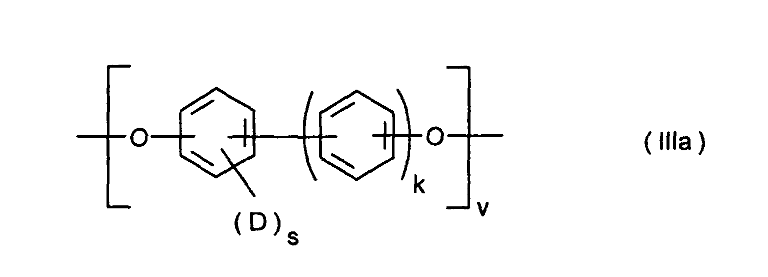 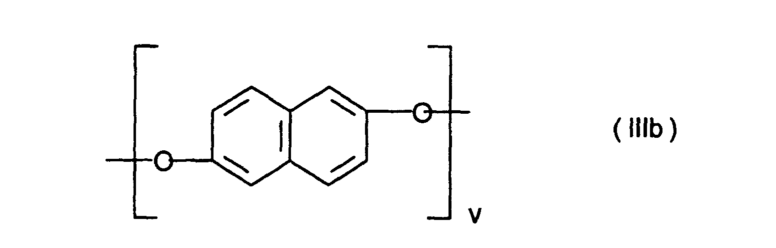 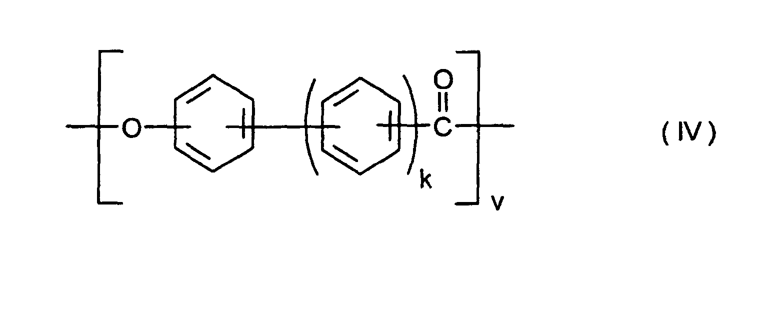 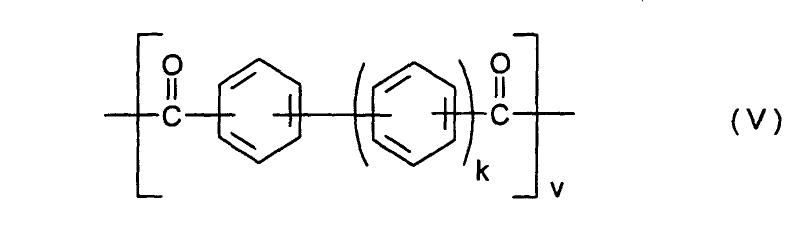 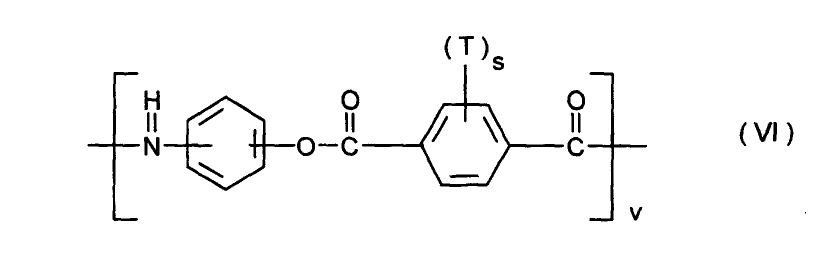 in which
T are identical or different and are a C₁-C₄-alkyl group, a C₁-C₄- alkoxy group or a halogen atom,
D are identical or different and are a C₁-C₄-alkyl group, C₆-C₁₀-aryl group, C₆-C₁₀-aralkyl group or a halogen atom,
s is an integer from 1 to 4,
k is the integer 0 or 1 and
v is an integer ≥ 1.

6. The polymer composition as claimed in one or more of claims 1 to 5, wherein the thermoplastically processable polycarbonate is at least one compound of the formula (VII) 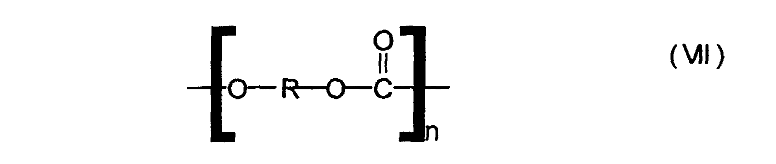 in which
R is an organic group, such as C₁-C₄-alkyl group, C₆-C₁₀-aryl group or C₆-C₁₀-aralkyl group and
n is an integer ≥ 1,
preferably a bisphenol-based polycarbonate which contains the monomer of the formula (VII')

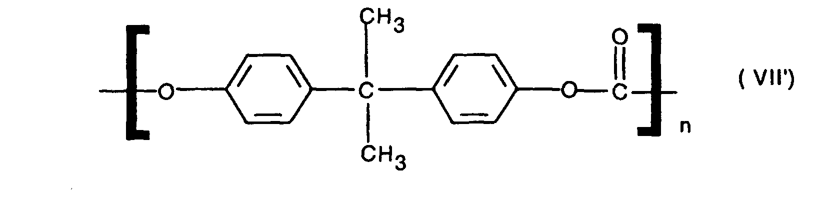

7. A process for the preparation of a polymer composition as claimed in one or more of claims 1 to 6, wherein at least one liquid crystalline copolymer, at least one polycarbonate and at least one reinforcing agent are melted and are extruded and the extrudate is comminuted.

8. The use of a reinforcing agent, wherein the reinforcing agent is at least one compound, such as an aromatic acid, a siloxane or a silicone-modified compound or consists of a mixture of phosphite esters with polyether imides or of a mixture of pyromellitic acid with silicone elastomers, for enhancing the mechanical properties of polymer compositions of liquid crystalline copolymers and thermoplastically processable polycarbonates.

9. The use of a polymer composition as claimed in one or more of claims 1 to 6 for the production of thin-walled housing parts, long filigree plug connections for chip modules, medical apparatuses and containers which are used for steam-distillation, and glass fibers and glass beads which are filled with minerals or graphite or reinforced with carbon fibers.

## Revendications

1. Composition polymère comprenant
de 5,0 % en poids à 65,0 % en poids d'au moins un copolymère cristallin liquide thermotrope,
de 35,0 % en poids à 95,0 % en poids d'au moins un polycarbonate transformable de façon thermoplastique et
de 0,01 % en poids à 5,0 % en poids d'au moins un agent de renforcement, l'agent de renforcement étant au moins un composé tel qu'un acide aromatique, un siloxane ou un composé modifié par une silicone, ou étant composé d'un mélange d'esters phosphites avec des polyéther-imides ou d'un mélange de l'acide pyroméllitique avec des élastomères siliconés.

2. Composition polymère selon la revendication 1, dans laquelle l'agent de renforcement est composé d'un mélange d'esters phosphites avec des polyéther-imides ou d'un mélange de l'acide pyroméllitique avec des élastomères siliconés.

3. Composition polymère selon la revendication 1 ou 2, comprenant
de 7,5 % en poids à 40,0 % en poids d'au moins un copolymère cristallin liquide thermotrope,
de 60,0 % en poids à 92,5 % en poids d'au moins un polycarbonate transformable de façon thermoplastique et
de 0,05 % en poids à 3,0 % en poids d'au moins un agent de renforcement.

4. Composition polymère selon l'une ou plusieurs des revendications 1 à 3, comprenant
de 10 % en poids à 25,0 % en poids d'au moins un copolymère cristallin liquide thermotrope,
de 75,0 % en poids à 90,0 % en poids d'au moins un polycarbonate transformable de façon thermoplastique et
de 0,1 % en poids à 1,5 % en poids d'au moins un agent de renforcement.

5. Composition polymère selon l'une ou plusieurs des revendications 1 à 4, dans laquelle un copolymère cristallin liquide thermotrope renferme des motifs récurrents de formules (I) à (VI) 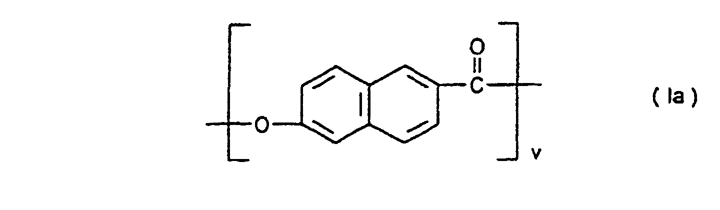 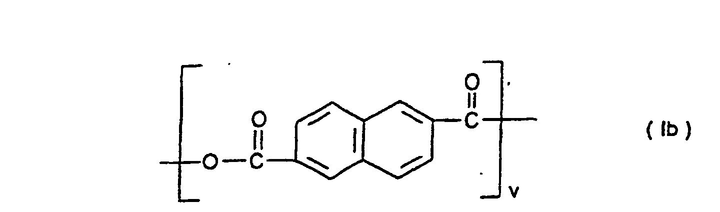 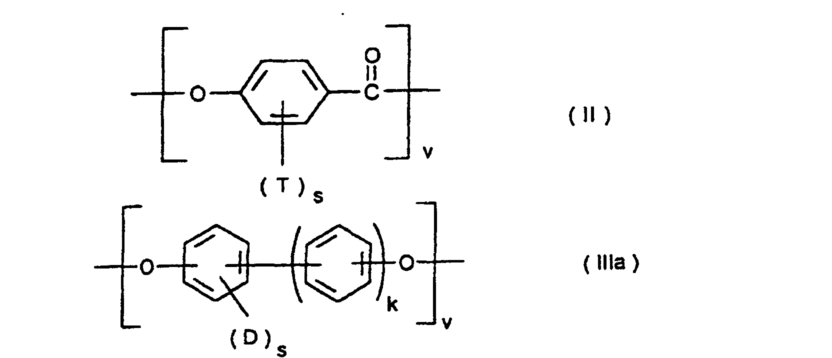 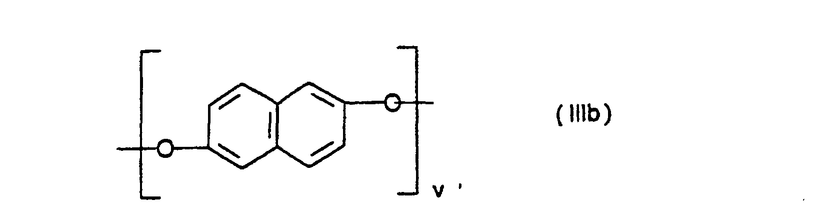 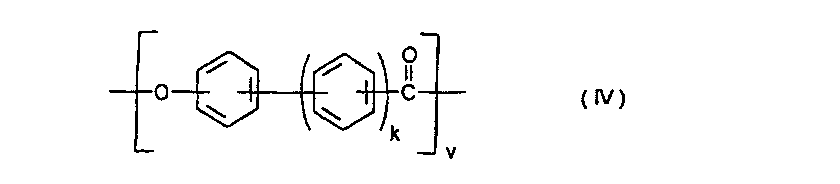 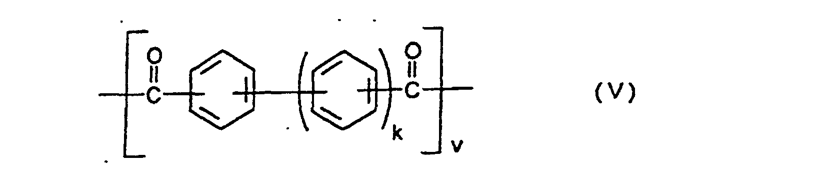 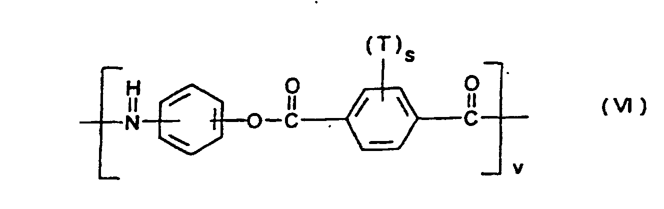 dans lesquelles
T est identique ou différent et représente un groupe alkyle en C₁-C₄, un groupe alcoxy en C₁-C₄ ou un atome d'halogène,
D est identique ou différent et représente un groupe alkyle en C₁-C₄, un groupe aryle en C₆- C₁₀, un groupe aralkyle en C₆-C₁₀ ou un atome d'halogène,
s représente un entier de 1 à 4,
k représente un entier de 0 à 1 et
v représente un entier ≥ 1.

6. Composition polymère selon l'une ou plusieurs des revendications 1 à 5, dans laquelle le polycarbonate transformable de façon thermoplastique est au moins un composé de formule générale (VII) 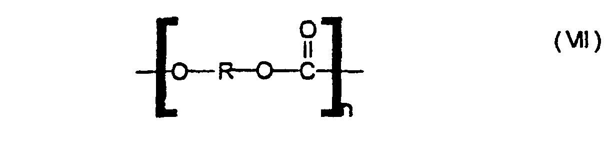 dans laquelle
R représente un groupe organique tel qu'un groupe alkyle en C₁-C₄, un groupe aryle en C₆-C₁₀ ou un groupe aralkyle en C₆-C₁₀, et
n représente un entier ≥ 1,
de préférence un polycarbonate à base de bisphénol renfermant le monomère de formule (VII')

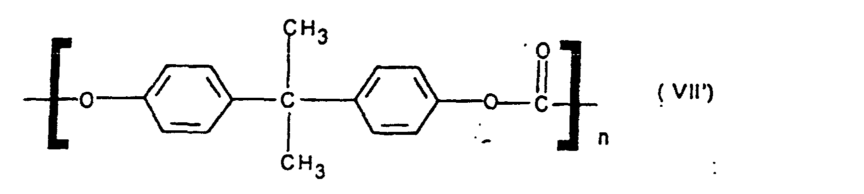

7. Procédé de préparation d'une composition polymère selon l'une ou plusieurs des revendications 1 à 6, dans lequel au moins un copolymère cristallin liquide, au moins un polycarbonate et au moins un agent de renforcement sont fondus et sont extrudés pour donner lieu à un fil de base et le fil de base est fragmenté.

8. Utilisation d'un agent de renforcement, l'agent de renforcement étant au moins un composé tel qu'un acide aromatique, un siloxane ou un composé modifié par une silicone ou étant composé d'un mélange d'esters phosphites avec des polyéther-imides ou d'un mélange de l'acide pyroméllitique avec des élastomères siliconés, en vue d'améliorer les propriétés mécaniques de compositions polymères à base de copolymères cristallins liquides et de polycarbonates transformables de façon thermoplastique.

9. Utilisation d'une composition polymère selon l'une ou plusieurs des revendications 1 à 6 pour la production de pièces de logement à parois minces, de longues connexions par fiche filigranées pour des modules puces, d'appareils et de récipients médicaux qui sont utilisés pour la distillation à la vapeur, ainsi que de fibres de verre et de billes de verre qui sont remplies de minéraux ou de graphite ou renforcées par des fibres de carbone.
